# EUROPÄISCHE PATENTANMELDUNG

(11) **EP 2 070 574 A1**
(43) Veröffentlichungstag der Anmeldung: **17.06.2009**
(21) Anmeldenummer: 08021756.5
(22) Anmeldetag: 15.12.2008
(51) Int. Cl.: B01D 24/12, B01D 24/16, B01D 24/26, B01D 24/36, A01K 63/04

(54) **Druckfilter und Verfahren zum Klären von Flüssigkeiten**

(30) Priorität: 14.12.2007 DE 102007060900; 17.12.2007 DE 102007061192; 21.12.2007 DE 102007063004
(71) Anmelder: Sprick, Heinrich, 55543 Bad Kreuznach (DE)
(72) Erfinder: Sprick, Heinrich, 55543 Bad Kreuznach (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein Filter, vorzugsweise für Teichanlagen und ein Verfahren zum Klären von Flüssigkeiten, mit einem Filter, in dem eine Vielzahl von Filterpartikeln aufgenommen sind. Die Durchströmungsrichtung ist entgegengesetzt der Kraft gewählt, die die Filterpartikel aufgrund ihres Dichteunterschieds zur zu klärenden Flüssigkeit erfahren. In dem Fall, in dem die spezifische Dichte der Filterpartikel größer als diejenige der zu klärenden Flüssigkeit ist, erfolgt dann eine Durchströmung entgegen der Schwerkraftrichtung von unten nach oben. In dem Fall, in dem die spezifische Dichte der Filterpartikel kleiner als diejenige der zu klärenden Flüssigkeit ist, erfolgt die Durchströmung umgekehrt von oben nach unten entgegen der Auftriebskraft.

## Beschreibung

Die Erfindung betrifft einen Druckfilter, vorzugsweise für Teichanlagen, gemäß dem Oberbegriff des Patentanspruchs 1 und ein Verfahren zum Klären von Flüssigkeiten.

Derartige Druckfilter können sowohl oberhalb als auch unterhalb des Wasserspiegels, beispielsweise der Wasseroberfläche im Teich, positioniert werden kann. Offene Filter hingegen können nur oberhalb der Wasseroberfläche positioniert werden, da sie ansonsten aus- oder überlaufen.

Aus dem Stand der Technik sind verschiedene Druckfilter bekannt, welche zur Klärung und Reinigung von Teichanlagen eingesetzt werden. Dabei wird eine zu klärende Flüssigkeit, mittels Rohren und Schläuchen, aus dem Teich über eine Pumpe einem Behälter zugeführt, in dem sich ein Filtermittel, das aus einer Vielzahl von Filterpartikeln gebildet ist, befindet. Dieses Filtermittel sorgt für eine mechanische Filterung, denn in den geringen Zwischenräumen der einzelnen Filterpartikel können sehr gut Verunreinigungen bis unter 20 Mikrometer aufgefangen werden. Auf der großen Oberfläche der Filterpartikel bildet sich mit der Zeit ein klebriger Biofilm, auf dem sich Bakterien an siedeln, die im Wasser enthaltene Schadstoffe abbauen. Die Reinigung des Filtermittels erfolgt wie bei einem Sandfilter über Rückspülung, wobei Teichwasser in den Filter zurückgepumpt wird und das Schmutzwasser in die Kanalisation abgeführt wird.

In den bekannten Druckfiltern kommen zwei Arten von Filtermitteln zum Einsatz. Diese unterscheiden sich unter anderem aufgrund ihres spezifischen Gewichtes. Ist der Behälter mit Sand gefüllt, so beträgt das spezifische Gewicht der Filterpartikel über 3 kg/dm³. Das führt zu schnell sinkenden Filterpartikeln, die sich auf dem Boden des Behälters ansammeln. Das in der Regel von oben durch den Sand gepresste Teichwasser benötigt einen Druck von mindestens 1 bar, um den Filterkuchen bestehend aus Sand und abgelagerten Verunreinigungen zu durchdringen. Nachteilig an dieser Wahl des Filtermittels ist der notwendige Einsatz von großen Druckpumpen, die sehr energieaufwändig sind.

Alternativ zu den Sandfiltern gibt es auch Filter wie beispielsweise unter www.ultrabead.com beschrieben, die schwimmende Filterpartikel verwenden. Die sogenannten "Beadfilter" sind Filter mit einem Filtermittel aus Plastik-Kugeln, die sogenannten Beads. Mehrere Millionen Kugeln aus Kunststoffgranulat wie z.B. PE oder PP mit einem spezifischen Gewicht von unter 1 kg/dm³ bilden das Filtermittel, das in der Flüssigkeit einen Auftrieb erfährt. Die dadurch schwimmenden Kugeln sorgen sowohl für eine mechanische Filterung als auch für eine biologische Filterung. Nachteilig an diesem Beadfilter sind die ebenfalls benötigten energiezehrenden Speisepumpen und die notwendigen häufigen Spülintervalle. Diese ergeben sich aus dem immer dichter werdenden Filterkuchen aus Beads und Verunreinigungen, der die mögliche Durchflussrate des Filters herabsetzt, so dass immer weniger Teichwasser gefiltert werden kann. Abhilfe schafft nur das Rückspülen, wobei die Pumpe mit höherer Leistung und gegebenenfalls mit Luftunterstützung die Kügelchen verwirbelt und eine Ablösung der Schmutzteilchen bewirkt, welche in die Kanalisation abgeführt werden. Bei den bekannten Lösungen werden häufig zur Steuerung elektrisch betätigte Mehrwegventile eingesetzt, die ebenfalls sehr viel Energie benötigen.

Demgegenüber liegt der Erfindung die Aufgabe zugrunde, einen Filter und ein Verfahren zum Klären von Flüssigkeiten zu schaffen, wobei der Filter ohne den Einsatz energieaufwändiger Hochdruckpumpen einsetzbar ist und gleichzeitig lange Zeitabstände zwischen den Spülintervallen ermöglicht.

Diese Aufgabe wird durch einen Filter mit den Merkmalen des Patentanspruchs 1 und mit einem Verfahren zum Klären von Flüssigkeiten nach Patentanspruch 13 gelöst.

Der erfindungsgemäße Filter weist einen mit einem Ein- und Auslauf versehenen Behälter auf, der im Innenraum ein Filtermittel aufnimmt, das aus einer Vielzahl von Filterpartikeln ausgebildet ist. Die Filterpartikelanordnung wird von einer zu klärenden Flüssigkeit durchströmt, wobei sich in den Zwischenräumen zwischen den Filterpartikeln und auf dieser die Verunreinigungen ablagern und sich auf der Oberfläche der Filterpartikel reinigende Bakterien ansiedeln, so dass ein Biofilm entsteht, der eine effektive biologische Umsetzung der organischen Bestandteile der Verunreinigungen gewährleistet. Erfindungsgemäß durchströmt die zu klärende Flüssigkeit den Filter entgegengesetzt zu der Richtung, in der die Filterpartikel aufgrund ihres spezifischen Gewichts einen Auftrieb erfahren oder absinken. D. h., bei Filterpartikeln, deren spezifisches Gewicht größer als dasjenige der zu klärenden Flüssigkeit ist, sinken die Filterpartikel bei "stehender" Flüssigkeit ab, so dass dann die Durchströmungsrichtung des Filters entgegengesetzt, von unten (in Schwerkraftrichtung gesehen) nach oben erfolgt. In dem Fall, in dem die Filterpartikel ein geringeres spezifisches Gewicht als die zu klärende Flüssigkeit haben, erfahren die Filterpartikel einen Auftrieb, so dass entsprechend die Durchströmung von oben nach unten (in Schwerkraftrichtung) eingestellt wird. Bei einer derartigen Strömungsführung bilden die Filterpartikel im Betrieb des Filters aufgrund der Strömungskräfte eine Art "Bett", das von der zu klärenden Flüssigkeit durchströmt wird, so dass sich die Verunreinigungen - wie oben beschrieben - an der Oberfläche der Filterpartikel und in dem Lückenvolumen des "Schwimmbetts" absetzen können. Ein Zusetzen dieses Lückenvolumens durch Verunreinigungen ist bei dieser Strömungsführung erschwert, da der Strömungsdruck ausreicht, um die Filterpartikel auseinander zu drücken, so dass das zur Ablagerung erforderliche Lückenvolumen praktisch selbsttätig eingestellt wird.

Im Gegensatz dazu setzt sich bei herkömmlichen Lösungen das Lückenvolumen zwischen den Filterpartikeln zu, da diese an einem Sieb oder dgl. abgestützt sind und von der Flüssigkeit in der gleichen Richtung durchströmt werden, in der sie einen Auftrieb oder Abtrieb erfahren, so dass das verbleibende Lückenvolumen sich langsam zusetzt und der Strömungswiderstand so lange ansteigt, bis der Flüssigkeitsvolumenstrom absinkt und eine Filterreinigung erforderlich ist.

Bei einem Ausführungsbeispiel der Erfindung ist das spezifische Gewicht der Filterpartikel so gewählt, dass sie in der zu klärenden Flüssigkeit absinken. In diesem Fall wird ein Druckfilter eingesetzt, bei dem die Flüssigkeit über eine Pumpe mit Druck beaufschlagt ist und die Filterpartikel auseinander gedrückt werden können, um auch bei Anlagerung von Verunreinigungen einen hinreichenden Strömungsquerschnitt bereit zu stellen. Bei einer derartigen Filteranordnung wird vorzugsweise ein geschlossenes Filtersystem verwendet, bei dem die Flüssigkeit mit einem geringen Überdruck beaufschlagt ist.

Bei einer alternativen Lösung ist das spezifische Gewicht der Filterpartikel geringer als dasjenige der zu klärenden Flüssigkeit gewählt, so dass die Filterpartikel als Schwimmdecke aufschwimmen. Entsprechend ist die Strömungsrichtung der zu klärenden Flüssigkeit dann entgegengesetzt zu diesem Auftrieb gewählt. Bei einer derartigen Strömungsführung kann ein offenes oder ein druckbeaufschlagtes Filtersystem gesetzt werden.

Nach einer groben Näherung kann das spezifische Gewicht der zu klärenden Flüssigkeit mit einem 1 kg/dm³ (Wasser) angesetzt werden, so dass bei der erstgenannten Lösung die Dichte der Filterpartikel entsprechend größer als 1 kg/dm³, im Bereich von beispielsweise 1,5 kg/dm³, und bei der zweitgenannten Lösung die Dichte kleiner 1 kg/dm³, beispielsweise im Bereich von 0,5 kg/dm³ eingestellt wird.

Bei beiden Systemen können vergleichsweise kleine Pumpen eingesetzt werden, da aufgrund der vorbeschriebenen selbsttätigen Anpassung des Lückenvolumens beim Durchströmen des "Schwimmbetts" nur ein vergleichsweise geringer Druckverlust entsteht, so dass sich der Filter mit geringerem Energieaufwand betreiben lässt, als es bei herkömmlichen Lösungen der Fall ist, bei denen vergleichsweise große Pumpen mit hohem Förderdruck eingesetzt werden müssen. Bei herkömmlichen Lösungen waren Pumpenleistungen im KW-Bereich erforderlich, während bei den erfindungsgemäßen Filtern Pumpen mit einer Leistungsaufnahme von wesentlich weniger als 1 KW einsetzbar sind.

Vorzugsweise werden die Filterpartikel des Filtermittels aus Kunststoffgranulat hergestellt.

Gemäß einem Ausführungsbeispiel kann oberhalb oder unterhalb des Filterpartikelpegels ein Schmutzablass angeordnet sein, aus dem die Verschmutzungen ausgespült werden können.

Besonders vorteilhaft ist es, wenn ein- und ablaufseitig und an einem Schmutzablassrohr Siebe angeordnet sind, die die Filterpartikel (Beads) am Verlassen des Behälters hindern.

Um einen möglichst großen Durchfluss auch bei kleinen Pumpen mit geringer Förderhöhe zu gewährleisten, werden möglichst große Rohrquerschnitte verwendet.

Vorteilhaft ist es, wenn am Einlauf und am Ablauf sowie am Schmutzablass jeweils ein Ventilelement oder ein Schieber angebracht ist, damit der jeweilige Anschluss abgesperrt werden kann.

Besonders energiesparende Pumpen weisen einen Förderdruck von unter einem Bar auf.

Dem Filter kann ein Vorfilter zugeordnet sein.

Im Folgenden werden bevorzugte Ausführungsbeispiele der Erfindung anhand schematischer Zeichnungen näher erläutert. Es zeigen:
- Fig. 1: ein Ausführungsbeispiel eines Filters mit Durchströmung von unten nach oben;
- Fig. 2: einen Filter mit Durchströmung von oben nach unten und
- Fig. 3: eine Variante des Filters aus Fig. 2

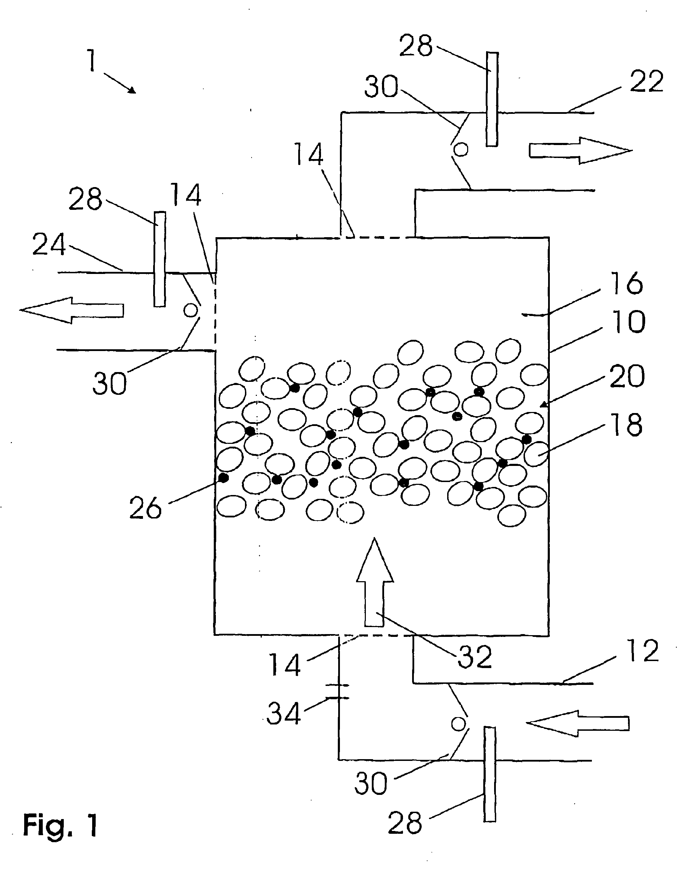

Figur 1 zeigt in stark vereinfachter Form ein erstes Ausführungsbeispiel eines Filters 1, der als Druckfilter ausgeführt ist. Dieser Filter hat einen Behälter 10, an dem ein Einlauf 12 und ein Ablauf 14 für die zu klärende Flüssigkeit, im vorliegenden Fall Teichwasser ausgeführt ist. In einem Innenraum 16 des Behälters 10 sind eine Vielzahl von Filterpartikeln 18 (Granulat) angeordnet, die gemeinsam ein Filtermittel 20 zum Zurückhalten von Verunreinigungen im Teichwasser ausbilden. Bei diesen Filterpartikeln handelt es sich um ein Kunststoffgranulat, dessen spezifische Dichte größer als diejenige des Teichwassers ist. D. h., die spezifische Dichte ist größer als 1 kg/dm³ gewählt, so dass die Filterpartikel 18 im nicht durchströmten Behälter 10 absinken. Über eine nicht dargestellte Pumpe wird das Teichwasser durch den Einlauf 12 hindurch in den Innenraum 16 des Behälters 10 gefördert, wobei die Pumpe so eingestellt ist, dass die Partikel 18 oberhalb des Behälterbodens ein schwebendes "Bett" ausbilden. Das Bett wird dann von der Flüssigkeit durchströmt, die über einen oberhalb des Betts gelegenen Ablauf 22 aus dem Behälter 10 austritt. Ein Austreten von Filterpartikeln 18 aus dem Behälter 10 wird durch Siebe 14 im Einlauf 12 und im Ablauf 22 verhindert. Sowohl im Einlauf 12 als auch im Ablauf 22 ist jeweils ein in Strömungsrichtung öffnendes Rückschlagventil 30 vorgesehen, das eine Rückströmung des Teichwassers verhindert. Zusätzlich können auch im Einlauf 12 und im Ablauf 22 Schieber oder Ventile zur Einstellung des Volumenstroms oder zum Absperren von Einlauf- und Ablauf vorgesehen sein.

Beim dargestellten Ausführungsbeispiel ist oberhalb der Schwimm- oder Schwebdecke des Filtermittels 20 zusätzlich noch ein Schmutzablauf 24 vorgesehen, in dem ebenfalls ein in Strömungsrichtung öffnendes Rückschlagventil 30 und ein Schieber 28 zum Absperren angeordnet ist. Auch im Bereich dieses Schmutzablasses 24 ist ein Sieb 14 zum Zurückhalten der Filterpartikel 18 angeordnet.

Die mit dem Teichwasser in Kontakt stehenden Abschnitte des Filters 1 werden vorzugsweise aus korrosionsfesten Materialien, bspw. Edelstahl oder hochfestem Kunststoff hergestellt.

Bei der Durchströmung der Schwimm- oder Schwebdecke setzen sich die Verunreinigungen 26 in dem Lückenvolumen zwischen den Filterpartikeln 18 ab, wodurch eine mechanische Reinigung stattfindet. Kleinere organische Verunreinigungen 26 sammeln sich auf der Oberfläche der Filterpartikel 18 an und bilden mit der Zeit einen klebrigen Biofilm, auf dem sich Bakterien ansiedeln, die im Wasser enthaltene Schadstoffe abbauen. Da die Filterpartikel 18 frei beweglich im Innenraum 16 aufgenommen sind, entsteht durch die abgelagerten Verunreinigungen praktisch kein Druckverlust, da sich das Lückenvolumen und somit der effektive Durchströmungsquerschnitt dieser Schwimm- oder Schwebdecke selbsttätig anpasst, so dass zwar das Volumen der Schwebdecke mit zunehmender Verunreinigung ansteigt, der Druckverlust jedoch im Wesentlichen gleichbleibt.

Zum Abführen dieser Verunreinigungen aus dem Behälter 10 wird der ablaufseitige Schieber 28 geschlossen und der Schieber 28 im Bereich des Schmutzablasses 24 geöffnet und zum Spülen des Behälters ein Spülwasservolumenstrom eingestellt. Beim dargestellten Ausführungsbeispiel wird der Spülvorgang durch Einleiten von Druckluft über eine Belüftung 34 unterstützt. Durch diese Druckluftbeaufschlagung werden die Filterpartikel 18 durcheinander gewirbelt, so das eine Art "Wirbelbett" entsteht, bei dem die Filterpartikel 18 rotieren und aneinander stoßen, so dass durch die entstehende Reibung die Verunreinigungen 26 abgelöst werden und durch den eingestellten Spülwasservolumenstrom dann über den Schmutzablass 24 abgeführt wird. Der Spülvorgang kann mit Teichwasser selbst oder mit sauberem Spülwasser erfolgen, so dass die Verunreinigungen zuverlässig aus dem Behälterinnenraum 16 abtransportiert und die spezifische Oberfläche der Filterpartikel 18 abgereinigt wird. Dieses Spülen mit Teich- oder mit Klarwasser kann während der Belüftung oder im Anschluss an die Belüftung erfolgen. Nach diesem Spülvorgang wird der Schieber 28 des Schmutzablasses 24 geschlossen und der ablaufseitige Schieber 28 geöffnet, so dass der Filter wieder betriebsbereit ist.

Die Siebweite der Siebe 14 ist so gewählt, dass die Filterpartikel 18 zurückgehalten werden, insbesondere im Bereich des Schmutzablasses 24 ist die Siebweite 14 jedoch so groß, dass die Verunreinigungen ohne nennenswerten Druckverlust durch das Sieb 14 hindurchtreten können.

Bei diesem Ausführungsbeispiel sind das spezifische Gewicht der Filterpartikel 18 und des Förderdruck der Pumpe so aufeinander abgestimmt, dass sich beim Betrieb des Filters am Boden das vorgeschriebene "Bett" einstellt, bei dem stets genügend Lückenvolumen vorhanden ist, um Verunreinigungen 26 zurückhalten zu können.

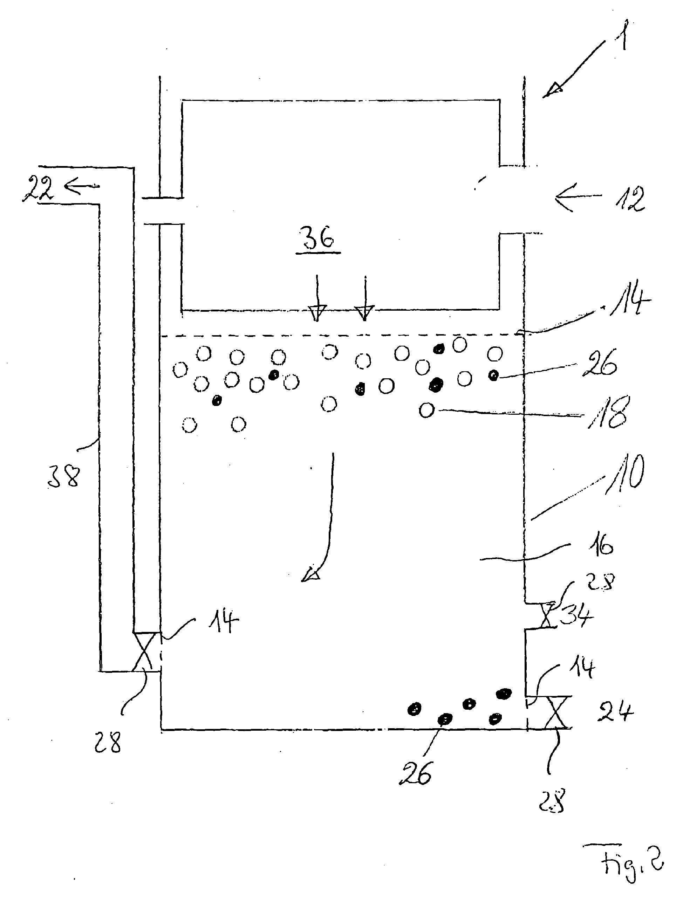

Bei den Filterpartikeln 18 handelt es sich um Kunststoffgranulat mit einer größeren spezifischen Dichte (beispielsweise 1,5 kg/dm³) als das zu klärende Teichwasser. In kinematischer Umkehr dieses Prinzips ist in Fig. 2 ein weiteres Ausführungsbeispiel eines Filters 1 dargestellt, bei dem die Filterpartikel 18 mit einer geringeren spezifischen Dichte (beispielsweise 0,5 kg/dm³) als das Teichwasser ausgeführt sind. Bei diesem Ausführungsbeispiel bilden die Filterpartikel 18 somit ohne Druckbeaufschlagung und Einstellung eines Fördervolumenstroms eine Schwimmdecke, da die Filterpartikel 18 aufgrund ihres Auftriebs auf der zu klärenden Flüssigkeit aufschwimmen. Entsprechend des erfindungsgemäßen Prinzips erfolgt dann die Durchströmungsrichtung entgegen dieses Auftriebs in der Darstellung gemäß Fig. 2 von oben nach unten, so dass die Schwimmdecke aufgelockert wird und eine nahe des Siebs 14 angeordnete Schwebdecke ausbildet. Der Ablauf 22 ist unterhalb dieser Schwebdecke im Behälter 10 ausgebildet, während der Zulauf 12 von oben, d. h. oberhalb der Schwebdecke angeordnet ist. Die Abführung der Verunreinigungen 26 während des vorbeschriebenen Spülvorgangs erfolgt über einen im Bereich des Behälterbodens angeordneten Schmutzablass 24. Die Belüftung 34 ist bei diesem Ausführungsbeispiel ebenfalls unterhalb der Schwebdecke angeordnet.

Bei diesem Ausführungsbeispiel kann ein offenes Filtersystem ausgeführt werden, da über die Pumpe - im Gegensatz zum vorbeschriebenen Ausführungsbeispiel - kein Überdruck aufgebaut werden muss. Bei dem in Fig. 2 dargestellten Ausführungsbeispiel tritt die zu klärende Flüssigkeit, im vorliegenden Fall das Teichwasser, durch den Einlauf in den Filter 1 ein und durchströmt zunächst einen Vorfilter 36, in dem grobe Verunreinigungen abgetrennt werden. Die Ausfilterung organischer Bestandteile oder feinerer Partikel erfolgt dann im erfindungsgemäßen Filter. Bei dem dargestellten Ausführungsbeispiel ist der Vorfilter 36 bspw. als Trommelfilter herkömmlicher Bauart ausgeführt. Auf eine detaillierte Beschreibung eines derartigen Trommelfilters wird bei Hinweis auf den bekannten Stand der Technik verzichtet.

Bei dem dargestellten Ausführungsbeispiel tritt die zu klärende Flüssigkeit etwa in Axialrichtung in eine Trommel des Vorfilters 36 ein und tritt aus dieser in Radialrichtung vorgefiltert aus. Oberhalb der Schwebdecke ist im Behälter 10 wiederum ein Sieb 14 ausgebildet, das die Filterpartikel 18 zum Vorfilter 36 hin zurückhält, so dass diese nicht in Kontakt mit der Filtertrommel gelangen. Das Teichwasser durchströmt dann die Schwebdecke und tritt über den Ablauf 22 aus dem Filter 1 aus. Das Ablaufrohr 38 ist dabei über den Flüssigkeitsspiegel im Filter 1 hinaus nach oben geführt, so dass ein Leerlaufen des offenen Filtersystems verhindert wird. Da die Durchströmungsrichtung (s. Pfeil in Fig. 2) entgegengesetzt der Auftriebsrichtung der Filterpartikel 18 gewählt ist, bildet sich stets genügend Lückenvolumen, um die Verunreinigungen 26 zwischen den Filterpartikeln 18 aufnehmen zu können, so dass die gleiche selbsttätige Anpassung des Lückenvolumens wie beim eingangs beschriebenen Ausführungsbeispiel vorliegt. Über den sich auf den Filterpartikeln 18 ausbildenden Biofilm werden dann die organischen Bestandteile des Teichwassers abgebaut, wobei diese organische Umsetzung aufgrund der effektiven Vorfilterung mit einem besseren Wirkungsgrad als beim eingangs beschriebenen Ausführungsbeispiel erfolgt. Selbstverständlich kann auch bei dem Ausführungsbeispiel gemäß Fig. 1 eine Vorfilterung vorgesehen werden, um einen entsprechenden Umsetzungsgrad zu erzielen.

Bei der dargestellten Lösung ist der Vorfilter 36 in den Behälter 10 integriert, wobei bspw. die Trommellagerung in den Behälterwandungen oder in einem Stützgestell des Behälters aufgenommen ist. Auf diese Weise erhält man einen sehr kompakten, klein bauenden Filter, mit dem Feststoffe und organische Verunreinigungen zurückgehalten und abgebaut werden können.

Ähnlich wie beim eingangs beschriebenen Ausführungsbeispiel wird beim Ansteigen des Volumens der Verunreinigungen im Schwimm- oder Schwebbett der Ablauf 22 über einen Schieber 28 oder über geeignete Ventile abgesperrt und die Belüftung 34 betätigt, so dass durch die eingeleitete Druckluft die Verunreinigungen aus der Schwimm- oder Schwebdecke und von der Oberfläche der Filterpartikel 18 abgelöst werden und nach unten, zum Boden des Behälters 10 hin absinken und dann aus dem Behälterinnenraum 16 herausgespült werden. Dieses Spülen kann wiederum durch Teichwasser oder durch klares Frischwasser erfolgen, das bspw. durch den Einlass 12 dem Filter 1 zugeführt wird. Durch diesen Spülvorgang wird dann auch der Trommelfilter gereinigt, wobei der Filterkuchen des Trommelfilters über nicht dargestellte Einrichtungen abgeführt wird.

Bei beiden vorbeschriebenen Filtersystemen ist die Durchströmungsrichtung des Filters 1 so gewählt, dass eine Durchströmung entgegengesetzt der aus den Dichteunterschieden resultierenden, auf die Filterpartikel 18 wirkenden Kräfte bei nicht durchströmtem Filter 1 vorliegt, so dass sich das Lückenvolumen zwischen den Filterpartikeln 18 in Abhängigkeit von dem Volumen der sich absetzenden Verunreinigungen 26 selbsttätig anpassen kann und somit der Druckverlust beim Durchströmen wesentlich geringer als bei herkömmlichen Lösungen ist, bei denen sich die Filterpartikelschüttung mit zunehmender Verunreinigung zugesetzt hat.

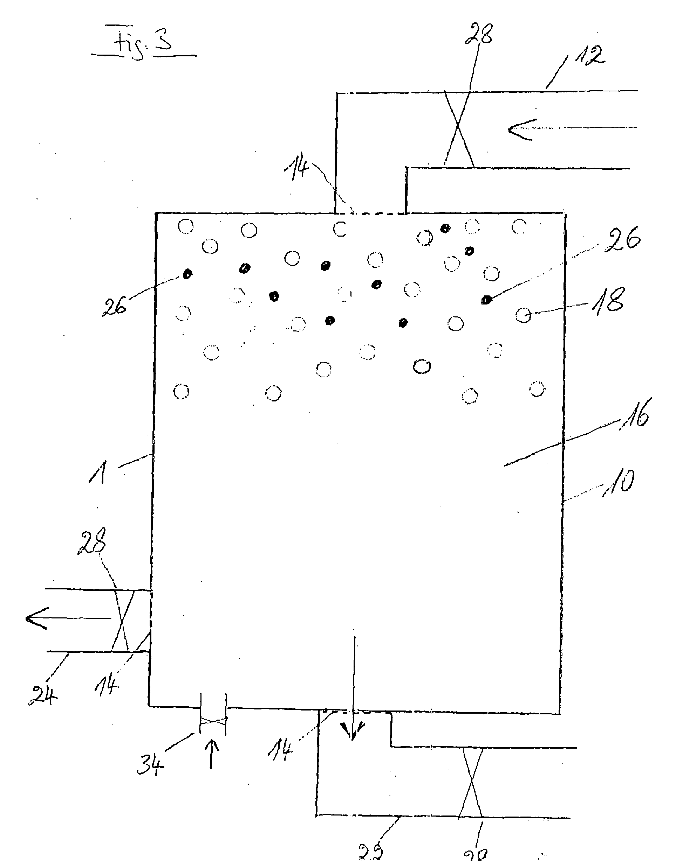

In Figur 3 ist ein Ausführungsbeispiel gezeigt, bei dem die Filterpartikel - wie bei der Variante in Figur 2 - aufschwimmen, das Filtersystem ist jedoch druckbeaufschlagt wie in Figur 1. Das Teichwasser wird über Kopf zugeführt und durchströmt die "Schwimmdecke" von oben nach unten (Figur 3) und tritt dann durch den bodenseitigen Ablauf 22 biologisch und mechanisch geklärt aus. Der Schmutzablass 24 und die Belüftung 34 sind ebenfalls im Bodenbereich ausgebildet. Aufgrund der Druckbeaufschlagung des Teichwassers im Filtersystem wird die Ausbildung des Lückenvolumens zwischen den Filterpartikeln unterstützt. Die Einstellung der Volumenströme und das Absperren der Anschlüsse 12, 22, 24, 34 erfolgt wiederum jeweils durch Ventile 28 oder Schieber.

Die Verwendung des Druckfilters ist nicht auf den bevorzugten Einsatz zum Klären von Teichwasser beschränkt, sondern bietet sich für alle weiteren Klär- und Reinigungsgebiete von Flüssigkeiten wie z. B. Klär- und Reinigungsvorgänge bei Getränken, Ölen usw. an. Die Dichte der Filterpartikel ist so gewählt, dass sie auch bei einer Durchströmung im Bodenbereich des Behälters 10 oder als Schwimmdecke im Bereich der Flüssigkeitsoberfläche verbleiben, das Lückenvolumen sich jedoch in Abhängigkeit von dem Volumen der abgelagerten Verunreinigungen zur Optimierung der Durchströmung verändern oder einstellen kann. Der Druckverlust bleibt dann auch bei steigender Ablagerung minimal, so dass kleine Pumpen mit geringer Leistungsaufnahme einsetzbar sind. Die Filterpartikel mit hoher Dichte können beispielsweise an PVC und diejenigen mit niedriger Dichte aus PE, PP hergestellt sein.

Offenbart ist ein Filter, vorzugsweise für Teichanlagen und ein Verfahren zum Klären von Flüssigkeiten, mit einem Filter, in dem eine Vielzahl von Filterpartikeln aufgenommen sind. Die Durchströmungsrichtung ist entgegengesetzt der Kraft gewählt, die die Filterpartikel aufgrund ihres Dichteunterschieds zur zu klärenden Flüssigkeit erfahren. In dem Fall, in dem die spezifische Dichte der Filterpartikel größer als diejenige der zu klärenden Flüssigkeit ist, erfolgt dann eine Durchströmung entgegen der Schwerkraftrichtung von unten nach oben. In dem Fall, in dem die spezifische Dichte der Filterpartikel kleiner als diejenige der zu klärenden Flüssigkeit ist, erfolgt die Durchströmung umgekehrt von oben nach unten entgegen der Auftriebskraft.

### Bezugszeichenliste

- 1: Druckfilter
- 10: Behälter
- 12: Einlauf
- 14: Sieb
- 16: Innenraum
- 18: Filterpartikel
- 20: Filtermittel
- 22: Auslauf
- 24: Schmutzablass
- 26: Verunreinigungen
- 28: Schieber
- 30: Rückschlagventil
- 32: Strömungsrichtung
- 34: Belüftung
- 36: Vorfilter
- 38: Ablaufrohr

## Patentansprüche

1. Filter mit einem mit Ein- und Auslauf (12; 22) versehenen Behälter (10), in dessen Innenraum (16) ein Filtermittel (20), mit einer Vielzahl von beweglichen Filterpartikeln (18), aufgenommen ist, **dadurch gekennzeichnet, dass** die Durchströmungsrichtung des Innenraums (16) etwa entgegengesetzt zur Bewegung des Filtermittels (29) in der Flüssigkeit aufgrund einer Dichtedifferenz gewählt ist.

2. Filter nach Anspruch 1, wobei der Innenraum (16) des Behälters (10) druckbeaufschlagt ist und die Filterpartikel (18) in der zu klärenden Flüssigkeit sedimentierfähig sind, und wobei die zu klärende Flüssigkeit das Filtermittel (20) von unten nach oben durchströmt.

3. Filter nach Anspruch 1, wobei die Dichte des Filtermittels (20) kleiner als diejenige der Flüssigkeit ist und die zu klärende Flüssigkeit den Innenraum (16) etwa von oben nach unten durchströmt.

4. Filter nach Anspruch 2, wobei das spezifische Gewicht des Filtermittels größer als 1 kg/dm³ ist.

5. Filter nach Anspruch 3, wobei das spezifische Gewicht des Filtermittels kleiner als 1 kg/dm³ ist.

6. Filter nach einem der vorhergehenden Ansprüche, wobei das Filtermittel (20) aus Kunststoffgranulat hergestellt ist.

7. Filter nach einem der vorhergehenden Ansprüche, wobei ablaufseitig ein Schmutzablass (24) angeordnet ist.

8. Filter nach einem der vorhergehenden Ansprüche, wobei im Bereich eines Ein- und Auslaufs (12; 22) Siebe (14) angeordnet sind, die die Filterpartikel (18) zurückhalten.

9. Filter nach Anspruch 8, wobei Rohre des Ein- und Auslaufs (12; 22) einen Querschnitt > 110 mm aufweisen.

10. Filter nach Anspruch 6, wobei die Rohre am Ein- und Auslauf (12; 22) sowie am Schmutzablass (24) Ventile (30) oder Schieber (28) aufweisen.

11. Filter nach einem der vorhergehenden Ansprüche, wobei die Filterpumpe im Filterbetrieb nur einen Pumpdruck von unter einem Bar aufbringen muss.

12. Filter nach einem der vorhergehenden Ansprüche, mit einem Vorfilter.

13. Verfahren zum Klären von Flüssigkeiten, vorzugsweise mit einem Filter (1), der eine Vielzahl von ein Schweb- oder Schwimmbett bildenden Filterpartikeln enthält, wobei Flüssigkeit entgegengesetzt zu einer von der Dichtedifferenz zwischen den Filterpartikeln (18) und der Flüssigkeit vorgegebenen Auftriebs- oder Absinkrichtung durch den Filter (1) geführt wird.

14. Verfahren nach Anspruch 13, wobei die Flüssigkeit Teichwasser ist.
